# EUROPEAN PATENT APPLICATION

(11) **EP 1 712 999 A2**
(43) Date of publication of application: **18.10.2006**
(21) Application number: 06112488.9
(22) Date of filing: 11.04.2006
(51) Int. Cl.: G06F 11/22

(54) **Apparatus and method for testing a computer system**

(30) Priority: 15.04.2005 KR 20050031625
(71) Applicant: Samsung Electronics Co., Ltd., Suwon-si 442-742 Gyeonggi-Do (KR)
(72) Inventor: Ha, Jong-uk 248-1105 2-danji APT, Suwon-si Gyeonggi-do (KR)
(74) Representative: Robinson, Ian Michael

(57) **Abstract**

An apparatus and a method to test a computer system, wherein the apparatus to test a computer system includes: a computer system interface module (332)to receive one or more power on self test (POST) codes from a computer system; a control module (333) to search, or determine, error information corresponding to the last received POST code, of the one or more received POST codes, where a new POST code is not received during, or after elapse of, a critical, or predetermined, time period; and a display module (335) to display the searched error information.

## Description

The present invention relates in general to an apparatus and a method of testing a computer system, and more particularly, aspects of the invention relate to an apparatus and a method of testing a computer system using information output according to a self-test operation of the computer system.

The power on self test (POST) includes sequential test operations conducted by a computer system in order to determine whether hardware components constituting the computer system, such as a keyboard, a disk drive, and a random access memory (RAM) are functioning properly. The POST is conducted by the BIOS (Basic Input Output System) in response to the computer system being turned on.

Where hardware components necessary to drive the computer system are detected through the POST operation, and are determined to be operating properly, the computer system boots regularly. However, where the hardware components to drive the computer system are not detected or they are determined to not be operating properly, the BIOS suspends the POST operation, and the computer system does not boot.

A POST card is used in order to check where an error has been caused in the computer system. Where the POST operation is being conducted, the BIOS outputs information on the progress of the POST operation, with the information being referred to as a POST card. The POST card decodes POST codes and displays them to users in the format of numerals or characters.

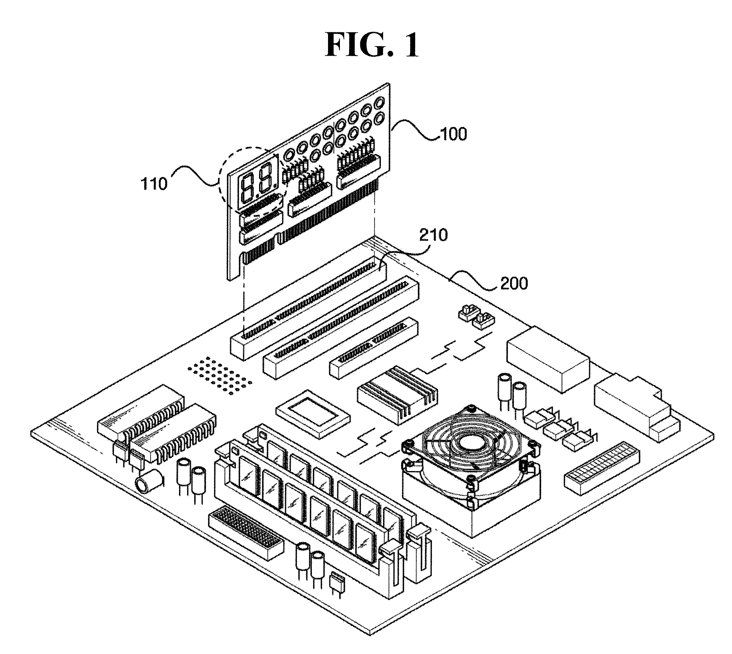

Figure 1 shows a conventional POST card built in a motherboard. A POST card 100 is inserted into a slot 210 on a motherboard 200 of a computer system. While the POST operation is being conducted, the POST code corresponding to the hardware component currently being tested is sent to the POST card 100 through a system bus. The POST card 100 decodes POST codes provided by the computer system via the system bus, and then displays the decoded POST code in the format of numerals or characters that a user can understand via a 7 segment light emitting diode (LED) 110.

Accordingly, while the POST operation is being conducted, numerals or characters displayed by the POST card 100 continuously vary depending upon a hardware component currently being tested. Where an error is detected in a specified hardware, the POST operation is suspended, and the BIOS stops outputting POST codes. Accordingly, the numerals or characters displayed by the POST card 100 do not vary. A user can know in which hardware component an error has occurred by checking the numerals or characters displayed by the POST card 100, where the characters displayed by the POST card 100 do not vary.

However, according to the conventional computer system testing method, because a POST card has to be set on a motherboard of a computer system, the case of the computer system typically has to be opened whenever testing the computer system, which can cause inconvenience to the user. Because a POST card displays a POST code received from the computer system in the format of numerals or characters, a user can have difficulty identifying in which hardware component an error has occurred when the user is not familiar with meanings of the numerals or characters displayed by the POST card.

According to the present invention there is provided an apparatus and method as set forth in the appended claims. Preferred features of the invention will be apparent from the dependent claims, and the description which follows.

An aspect, among other aspects, of the invention is to more easily determine that an error has occurred in a computer system.

According to an aspect of the invention, there is provided a computer system testing method, including: receiving one or more POST codes from a computer system; searching to determine error information corresponding to the last received POST code among the received POST codes, where a new POST code is not received during a critical, or predetermined, time period; and displaying the searched error information.

According to another aspect of the present invention, there is provided an apparatus to test a computer system, including: a computer system interface module to receive one or more POST codes from a computer system; a control module to search to determine error information corresponding to the last received POST code among the received POST codes, where a new POST code is not received during a critical, or predetermined, time period; and a display module to display the searched error information.

Additional aspects and/or advantages of the invention are set forth in or are evident from the description which follows, or can be learned by practice of the invention.

These and/or other aspects and advantages of the invention will become apparent and more readily appreciated from the following description of the embodiments, taken in conjunction with the accompanying drawings of which:
Figure 1 shows a motherboard with a POST card according to the conventional art;
Figure 2 shows a computer system testing apparatus connected to a computer system according to an embodiment of the invention;
Figure 3 is a block diagram of a computer system testing apparatus according to an embodiment of the invention;
Figure 4 illustrates POST operations and error information corresponding to POST codes according to an embodiment of the invention;
Figure 5 illustrates test information displayed by the computer system testing apparatus according to an embodiment of the invention; and
Figure 6 is a flowchart illustrating a computer system testing method according to an embodiment of the invention.

Reference will now be made in detail to the embodiments of the invention, examples of which are illustrated in the accompanying drawings, wherein like reference numerals refer to the like elements throughout. The embodiments are described below in order to explain the invention by referring to the figures.

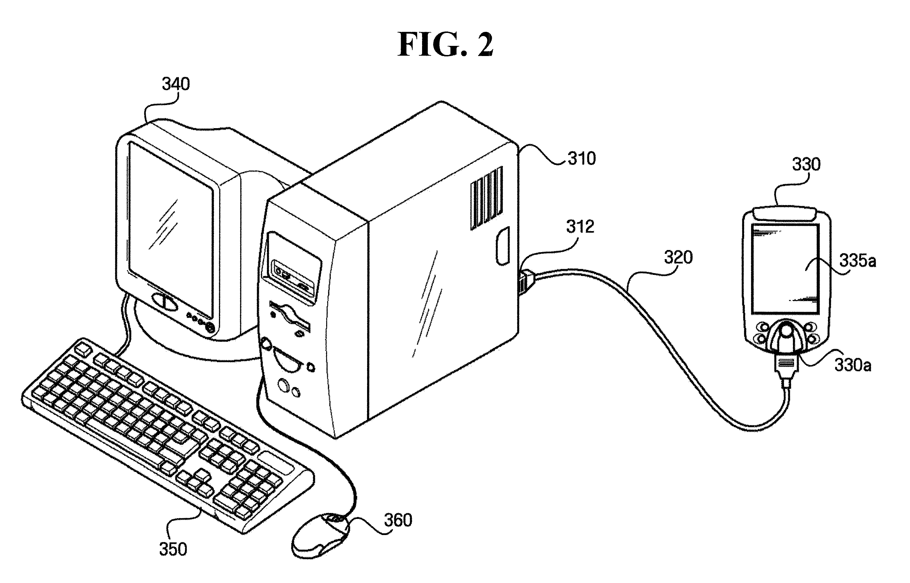

Figure 2 shows a computer system testing apparatus 330 connected to a computer system 310 according to an embodiment of the invention. To test the computer system 310, a user connects the computer system testing apparatus 330 to the computer system 310. Also, the computer system 310 can be associated with a monitor or display device 340, a keyboard 350 and/or a mouse 360, as illustrated in Figure 2.

The computer system 310 and the computer system testing apparatus 330 can be connected by wire or wireless communication. However, the POST operation is typically executed before a wireless communications apparatus (for example, a wireless local area network (LAN) card) in the computer system 310 is activated. Therefore, it is more typical that the computer system 310 and the computer system testing apparatus 330 are connected by a wire interface 320, such as illustrated in Figure 2, but can also be wirelessly connected, such as through a suitable wireless type transmitter/receiver interface device.

An end of the wire interface 320 can be connected to a port 312 of the computer system 310. For example, the port 312 can be a serial port, a parallel port, a USB port (Universal Serial Bus port), or an IEEE 1394 port (Institute of Electrical and Electronics Engineers 1394 port). Considering an activation state of each port according to progress of the POST, the port 312 is typically a serial port or a parallel port.

The other end of the wire interface 320 is connected to a port 330a of the computer system testing apparatus 330. For example, the port 330a of the computer system testing apparatus 330 can be a serial port, a parallel port, a USB port or an IEEE 1394 port. Where the computer system testing apparatus 330 is embodied as a portable terminal, such as a personal digital assistant (PDA), the port 330a of the computer system testing apparatus 330 is typically a USB port. Also, the wire interface 320 can be a serial to USB cable or a parallel to USB cable, or other suitable interface.

POST code(s), generated in response to the POST operation(s) of the computer system 310 being conducted, can be sent to the computer system testing apparatus 330 via the wire interface 320 from the computer system 310. Outputting the POST code to the port 312 of the computer system 310, to which the wire interface 320 is connected, can be achieved, such as by changing the BIOS configuration of a computer system 310. Accordingly, where the POST operation of the computer system 310 is being executed, the computer system testing apparatus 330 connected, or communicating, with the computer system 310 can receive POST codes from the computer system 310.

The computer system testing apparatus 330 is typically a computing device that has a predetermined capability for operating data and includes a nonvolatile memory which can read data, write data and delete data, similar to a flash memory. In this regard, the computer system testing apparatus 330 can be a portable terminal, such as a personal digital assistant (PDA) or a notebook computer, or other suitable processing device.

The computer system testing apparatus 330 stores POST codes, POST operation, progress or process information and error information corresponding to each POST code received from the computer system 310. Where a POST code is transmitted by the computer system 310, the computer system testing apparatus 330 displays, such as on a display 335a, the progress state of the POST operation(s) corresponding to the received POST code(s), so that a user can easily know and monitor the progress of the POST operation (s).

Where the POST operation has been initiated in the computer system 310, and where no POST code is received from the computer system 310 for a set, or predetermined, time period, the computer system testing apparatus 330 can determine that an error has occurred in the computer system 310. Accordingly, the computer system testing apparatus 330 displays error information on the display 335a corresponding to the latest POST code among the received POST codes received from the computer system 310. Where an error has occurred in the computer system 310 during the conducting of the POST operation(s), the user can, according to aspects of the invention, more easily check a hardware component and/or components of or associated with the computer system 310 that generated the error and can also check information or corrective measure(s) corresponding to the error.

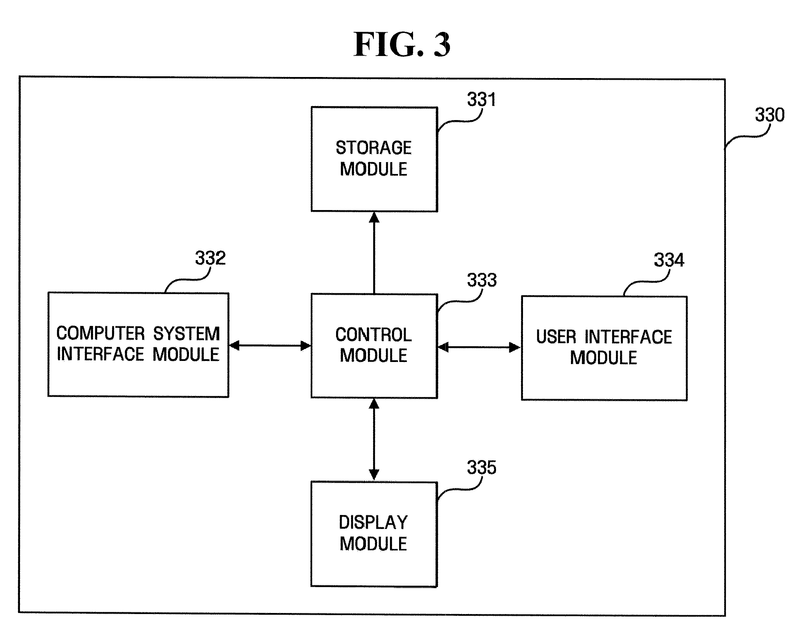

The computer system testing apparatus 330 according to an embodiment of the invention will be described with reference to Figure 3 to 6. Figure 3 is a block diagram of the computer system testing apparatus 330. The computer system testing apparatus 330 includes a storage module 331, a computer system interface module 332, a control module 333, a user interface module 334, and a display module 335.

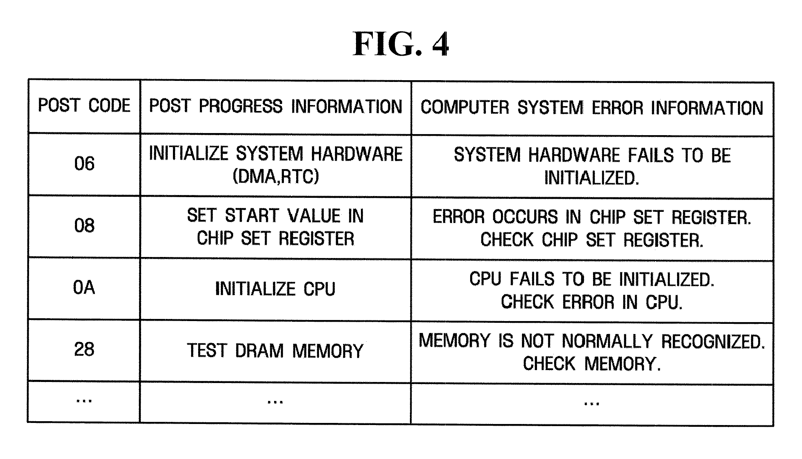

The storage module 331 stores the POST codes, information on the progress of the POST operation(s), POST progress information, and the errors and error information corresponding to POST codes output while the POST of the computer system 310 is being conducted. The storage module 331 can include a suitable memory, such as a read only memory (ROM), a random access memory (RAM), and can also include floppy disks, hard disks, optical recording media (e.g., CD-ROMs, DVDs, etc.), and/or suitable storage media. An example of the POST progress information and the error information stored in the storage module 331, according to an embodiment of the invention, are illustrated in tabular form in Figure 4. Figure 4 illustrates POST codes and corresponding POST progress information and computer system error information corresponding to a POST code. The POST progress information indicates the hardware component(s) of or associated with the computer system 310 being tested by or through the POST or the POST operation(s). The error information indicates information on the hardware component(s) which has/have malfunctions(s) or problem(s) and potential remedy/remedies in relation to the problem(s). Thus, the error information includes information on a malfunctioning hardware component, or other component, of or associated with the computer system 310 and/or advice information corresponding to the error and/or malfunction.

The computer system interface module 332 of the computer system testing apparatus 330 receives POST code(s) from the computer system 310 via a wire or wireless medium. As described with reference to Figure 2, the computer system 310 and the computer system testing apparatus 330 are typically connected by a wire interface 320. The computer system interface module 332 can be a USB port, an IEEE 1394 port, a serial port, or a parallel port, a wireless interface type device, or other suitable interface.

The user interface module 334 of the computer system testing apparatus 330 can receive a request input by the user to test the computer system 310. Where a request to test the computer system 310 is input via the user interface module 334, the request is provided or communicated to the control module 333, and the control module 333 determines whether the computer system interface module 332 is connected to, or in communication with, the computer system 310. In this regard, the user interface module 334 can be an input device, such as a keypad, a touch pad, a touch screen, or other suitable inputting apparatus, enabling a user to select or enable functions relating to the POST operations supported by the computer system testing apparatus 330.

The control module 333 controls the functions of the computer system testing apparatus 330. In this regard, the control module 333 can be a processor, microprocessor or an application specific integrated circuit (ASIC), with associated memory and software or programming, to control the operations of and perform the functions of the computer system testing apparatus 330. The control module 333 interprets POST code(s) received from the computer system 310, where POST operation(s) is/are being executed in the computer system 310. The control module 333, where POST code(s) is/are received from the computer system 310, searches the storage module 331 to identify POST progress information and/or corresponding remedial type information, such as the computer system error information illustrated in Figure 4, corresponding to the interpreted POST code, in the storage module 331. For example, where the information illustrated in Figure 4 is stored in the storage module 331, the POST progress information indicating "initialize system hardware" is correlated with the POST code "06" received from the computer system 310, and the information can be further refined or correlated with the computer system error information indicating "system hardware fails to be initialized", corresponding to the POST code "06".

Further, the control module 333 searches to determine error information corresponding to the last received POST code, of the one or more received POST code(s), where a new POST code is not received from the computer system 310 for a time period equal to or greater than a critical, or predetermined, time period via the computer system interface module 332. For example, where the information illustrated in Figure 4 is stored in the storage module 331, and the critical, or predetermined, time period has elapsed, and the last received POST code from the computer system 310 is "OA", the control module retrieves error information stating "CPU fails to be initialized. Check error in CPU" is retrieved from the storage module 331, such as for display on the display 335a of the display module 335.

The display module 335 displays information, such as on the display 335a, on the testing of, or relating to the testing of, the computer system 310 (hereinafter, referred to as "test information"). Such test information can include, for example, the connection status between the computer system interface module 332 and the computer system 310, a POST code transmitted from the computer system 310, and/or a POST progress information and error information searched through the control module 333. The display module 335 including the display 335a can be a monitor type device, such as a LCD (Liquid Crystal Display) type device, or other suitable display device.

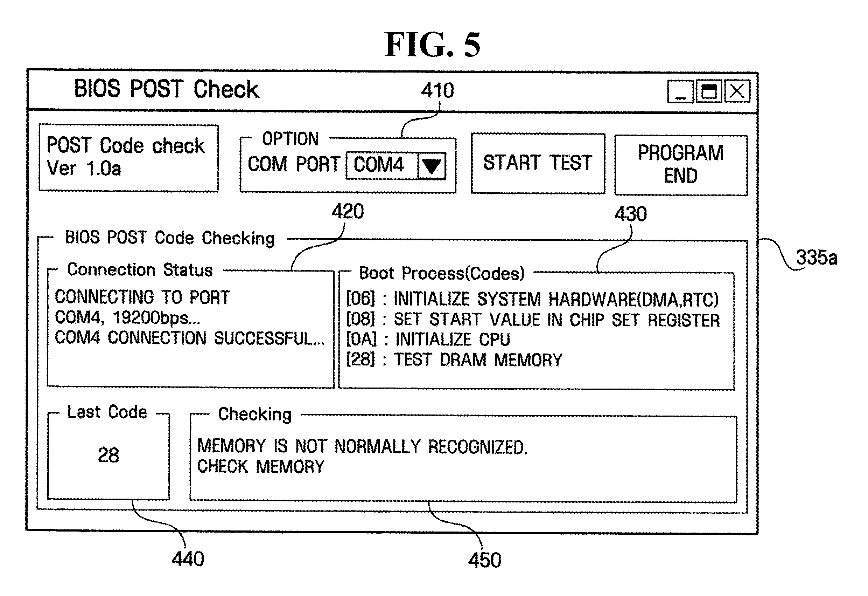

An example of the test information displayed by the display module 335 on the display 335a is illustrated in FIG. 5. As illustrated, a first display area 410 displays a port selection box of the computer system interface module 332 connected with the computer system 310 through the wire interface 320, or other suitable wire or wireless interface, and a second display area 420 displays a connection status of the computer system 310.

A third display area 430 of the display 335a of the display module 335 displays a POST code transmitted by the computer system 310 and the POST progress information corresponding to the POST code. Therefore, by referring to the display 335a, such as illustrated in Figure 5, a user can know that the system hardware of the computer system 310 has been initialized, a start value has been set in a chip set register, the CPU has been initialized, and testing of DRAM memory is currently being conducted, for example.

A fourth display area 440 of the display 335a of the display module 335 displays a POST code corresponding to a component, such as a hardware component, or other component, associated with the computer system 310, where an error has occurred. A fifth display area 450 displays error information corresponding to the POST code where the error has occurred. For example, where the last POST code received was "28", as illustrated in the display area 440, the display area 450, corresponding to the POST code "28", details that an error has occurred in a memory of the computer system 310, and that the computer system testing apparatus 330 advises checking of the memory of the computer system 310.

With respect to Figure 3, and the computer system testing apparatus 330, the term "module" for the various described components, can indicate a software component or a hardware component, such as a field-programmable gate array (FPGA) or an application-specific integrated circuit (ASIC). The respective module performs a particular function and can be included in an addressable storage medium or it can be configured to execute on one or more processors. Accordingly, the modules can include components, such as software components, object-oriented software components, class components, and task components, operations, functions, attributes, procedures, subroutines, segments of a program code, drivers, firmware, microcode, circuits, data, databases, data structures, tables, arrays, and parameters. Also, components and features provided by the modules can be combined into a smaller number of components and features, or they can be divided into a greater number of components and features.

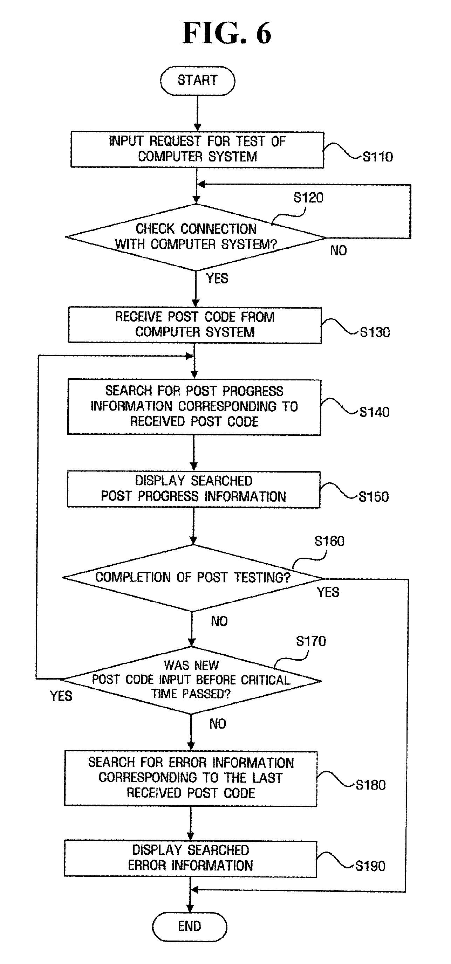

Operations between modules included in the computer system testing apparatus 330 will be described with reference to the flowchart of Figure 6 which illustrates a computer system testing method according to an embodiment of the invention. After connecting or communicating the computer system testing apparatus 330 with the computer system 310, a user requests a test of the computer system 310 via the user interface module 334, and then typically turns on the computer system 310, although the computer system 310 can be turned on before a user requests a test of the computer system 310.

Where a testing request is input via the user interface module 334 at operation S110, the control module 333 checks whether the computer system 310 is connected to or in communication with the computer system testing apparatus 330 via the computer system interface module 332 at operation S120. Where the computer system 310 is not connected to or in communication with the computer system testing apparatus 330, the control module 333 waits until the computer system 310 is connected to or in communication with the computer system testing apparatus 330 at operation S120. The control module 333 can stop testing the computer system 310 where the computer system 310 is not connected to or in communication with the computer system testing apparatus 330 for more, or greater, than a critical, or predetermined, time period.

After checking the connection with, or communication with, the computer system 310, the computer system interface module 332 receives a POST code from the computer system 310 at operation S130. In response to receiving the POST code, the control module 333 searches the storage module 331 to determine POST progress information corresponding to the POST code at operation S140. Where the POST progress information is searched, the display module 335 displays the searched POST progress information at operation S150 corresponding to the searched POST code.

The control module 333 determines whether the received POST code instructs completion of the POST testing operations at operation S160. Where the POST code instructs completion of the POST testing operations at operation S160, the control module 333 completes testing of the computer system 310. Where the received POST code does not instruct completion of the POST testing operations at operation S160, the control module 333 determines whether a new POST code has been input from the computer system 310 via the computer system interface module 332 before the critical, or a predetermined time period had passed, or elapsed, since the last or previous POST code was received in operation S130 at operation S170.

Where a new POST code is received before the critical, or predetermined, time period has passed or elapsed, at operation S170, the control module 333 searches the storage module 331 to determine the POST progress information corresponding to the newly received POST code stored in the storage module 331 at operation S140. The display module 335 on the display 335a displays the searched POST progress information corresponding to the newly received POST code at operation S150.

However, unless a new POST code is received before the critical, or predetermined, time period has passed at operation S170, the control module 333 searches the storage module 331 to determine error information corresponding to the last received POST code of the one or more received POST codes at operation S180. In which case, where a new POST code is not received before the critical, or predetermined, time period, has passed, or elapsed, the display module 335 on the display 335a displays the searched error information at operation S190 corresponding to the last received POST code. Where error information corresponding to the last received POST code has been determined, the above operations S110 through S190 can be continued, carried out or performed to determine other POST code(s) corresponding to other malfunctioning component(s) associated with the computer system 310 and to provide error or advice information corresponding to other error(s) or other malfunctioning component(s) associated with the computer system 310.

As described above, according to the apparatus, methods and operations to test a computer system, according to aspects of the invention, a user can check to determine error(s) in a computer system and can more easily respond to the error(s).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computer system testing method, comprising:
receiving one or more power on self test (POST) codes from a computer system;
searching error information corresponding to a last received power on self test (POST) code of the one or more received power on self test (POST) codes from the computer system, where a new power on self test (POST) code is not received during a predetermined time period; and
displaying the searched error information corresponding to the last received power on self test (POST) code, where a new power on self test (POST) code is not received during the predetermined time period.

2. The method of claim 1 further comprising:
searching to determine power on self test (POST) progress information corresponding to the one or more received power on self test (POST) codes; and
displaying the searched power on self test (POST) progress information corresponding the one or more received power on self test (POST) codes.

3. The method of claim 2, wherein:
the power on self test (POST) progress information comprises information indicating a hardware component that is being tested by the computer system through a power on self test (POST), and
the error information comprises information on a malfunctioning hardware component of the computer system and advice information corresponding to the error.

4. A computer system testing apparatus (330), comprising:
a computer system interface module (332) to receive one or more power on self test (POST) codes from a computer system (310);
a control module (333) to search error information corresponding to a last received power on self test (POST) code of the one or more received power on self test (POST) codes, where a new power on self test (POST) code is not received during a predetermined time period; and
a display module (335) to display the searched error information corresponding to the last received power on self test (POST) code, where a new power on self test (POST) code is not received during the predetermined time period.

5. The apparatus of claim 4, wherein:
the control module (333) searches to determine power on self test (POST) progress information corresponding to the one or more received power on self test (POST) codes, and
the display module (335) displays the searched power on self test (POST) progress information corresponding to the one or more received power on self test (POST) codes.

6. The apparatus of claim 5, wherein:
the power on self test (POST) progress information comprises information indicating a hardware component that is being tested by the computer system (310) through a power on self test (POST), and
the error information comprises information on a malfunctioning hardware component and advice information corresponding to the error.

7. The apparatus of claim 6, further comprising:
a storage module (331) to communicate with the control module (333), the storage module (331) to store information comprising the power on self test (POST) progress information and the error information corresponding to the one or more power on self test (POST) codes.

8. The apparatus of claim 7, wherein:
the storage module (331) stores the power on self test (POST) codes corresponding to the stored power on self test (POST) progress information and the error information.

9. The apparatus of any preceeding claim, further comprising:
a user interface module (334) to receive a request input by a user to test the computer system (310) and to communicate the request to test the computer system (310) to the control module (333).

10. The apparatus of claim 4, wherein:
the control module (333) determines power on self test (POST) progress information that indicates one or more components associated with the computer system (310) being tested by the power on self test (POST), and
the error information comprises information on one or more components associated with the computer system (310), where a malfunction corresponding to the one or more components associated with the computer system (310) is indicated by a power on self test (POST).

11. A computer system testing apparatus (330), comprising:
a computer system interface module (332) to receive one or more power on self test (POST) codes from a computer system (310);
a control module (333) to determine error information corresponding to one or more of the received power on self test (POST) codes, where a malfunction is indicated in one or more components associated with the computer system (310) corresponding to one or more of the received power on self test (POST) codes; and
a display module (335) to display the determined error information corresponding to one or more of the received power on self test (POST) codes, where the malfunction is indicated in the corresponding one or more components associated with the computer system (310).

12. The apparatus of claim 11, wherein:
the control module (333) determines the error information corresponding to a last received power on self test (POST) code of the one or more received power on self test (POST) codes, where a new power on self test (POST) code is not received during a predetermined time period.

13. The apparatus of claim 11, wherein:
the control module (333) determines power on self test (POST) progress information corresponding to the one or more received power on self test (POST) codes, and
the display module (335) displays the determined power on self test (POST) progress information corresponding to the one or more received power on self test (POST) codes.

14. The apparatus of claim 13, wherein:
the power on self test (POST) progress information comprises information indicating one or more components being tested by the computer system (310) through a power on self test (POST), and
the error information comprises information on one or more components associated with the computer system (310), where the malfunction corresponding to the one or more components associated with the computer system (310) is indicated by the power on self test (POST).

15. The apparatus of claim 11, further comprising:
a storage module (331) to communicate with the control module, the storage module (331) to store information comprising power on self test (POST) progress information and the error information corresponding to the one or more power on self test (POST) codes.

16. The apparatus of claim 15, wherein:
the storage module (331) stores the power on self test (POST) codes corresponding to the stored power on self test (POST) progress information and the error information.

17. The apparatus of any of claims 11 to 16, further comprising:
a user interface module (334) to receive a request input by a user to test the computer system (310) and to communicate the request to test the computer system (310) to the control module (333).

18. A computer system testing method, comprising:
receiving a power on self test (POST) code from a computer system (310);
determining error information corresponding to a last received power on self test (POST) code, where a new power on self test (POST) code is not received during a predetermined time period; and
displaying the determined error information corresponding to the last received power on self test (POST) code, where a new power on self test (POST) code is not received during the predetermined time period.

19. A computer system testing method, comprising:
receiving a power on self test (POST) code from a computer system (310);
determining error information corresponding to the received power on self test (POST) code, where a malfunction is indicated in a component associated with the computer system (310) corresponding to the received power on self test (POST) code; and
displaying the determined error information corresponding to the received power on self test (POST) code, where the malfunction is indicated in the component associated with the computer system (310) corresponding to the received power on self test (POST) code.

20. A computer system testing method, comprising:
receiving one or more power on self test (POST) codes from a computer system (310);
determining error information corresponding to one or more of the received power on self test (POST) codes, where a malfunction is indicated in one or more components associated with the computer system (310) corresponding to one or more of the received power on self test (POST) codes; and
displaying the determined error information corresponding to one or more of the received power on self test (POST) codes, where the malfunction is indicated in the corresponding one or more components associated with the computer system (310).

21. The method of claim 20, wherein the determining error information comprises:
determining the error information corresponding to a last received power on self test (POST) code of the one or more received power on self test (POST) codes, where a new power on self test (POST) code is not received during a predetermined time period.

22. The method of claim 21, further comprising:
determining power on self test (POST) progress information corresponding to the one or more received power on self test (POST) codes; and
displaying the determined power on self test (POST) progress information corresponding the one or more received power on self test (POST) codes.

23. The method of claim 22, wherein:
the power on self test (POST) progress information comprises information indicating a component that is being tested by the computer system (310) through a power on self test (POST), and
the error information comprises information on the malfunctioning component of the computer system (310) and advice information corresponding to the error.

24. The method of claim 20, further comprising:
determining power on self test (POST) progress information corresponding to the one or more received power on self test (POST) codes; and
displaying the determined power on self test (POST) progress information corresponding the one or more received power on self test (POST) codes.

25. The method of claim 24, wherein:
the power on self test (POST) progress information comprises information indicating a component that is being tested by the computer system (310) through a power on self test (POST), and
the error information comprises information on the malfunctioning component of the computer system (310) and advice information corresponding to the error.

26. The method of claim 24, further comprising:
storing information comprising power on self test (POST) progress information and the error information corresponding to the one or more power on self test (POST) codes.

27. The method of claim 26, wherein the storing information further comprises:
storing the power on self test (POST) codes corresponding to the stored power on self test (POST) progress information and the error information.

28. The method of claim 20, further comprising:
requesting by a user to power on self test (POST) the computer system (310); and
providing the one or more power on self test (POST) codes from the computer system (310).
